# EUROPÄISCHE PATENTANMELDUNG

(11) **EP 3 171 148 A2**
(43) Veröffentlichungstag der Anmeldung: **24.05.2017**
(21) Anmeldenummer: 16197008.2
(22) Anmeldetag: 03.11.2016
(51) Int. Cl.: G01M 5/00

(54) **VERBINDUNGSELEMENT**

(30) Priorität: 19.11.2015 AT 7452015
(71) Anmelder: Vinzenz Harrer GmbH, 8130 Frohnleiten (AT)
(72) Erfinder: Harrer, Vinzenz, 8162 Passail (AT)
(74) Vertreter: Gibler & Poth Patentanwälte KG

(57) **Zusammenfassung**

Bei einem Verbindungselement (1) zur Herstellung einer Tragwerkselementenverbindung zwischen wenigstens zwei Tragwerkelementen eines Gebäudes, wird vorgeschlagen, dass das Verbindungselement (1) wenigstens eine Sensoreinheit (2) umfasst, und dass die wenigstens eine Sensoreinheit (2) zumindest mittelbar mit einem Auslastungsgrad der Tragwerkselementenverbindung zusammenhängende Messdaten erfasst. Weiters wird ein Verfahren zur Erfassung eines Auslastungsgrades wenigstens einer Tragwerkselementenverbindung vorgeschlagen.

## Beschreibung

Es sind Verbindungselemente bekannt, welche vorgesehen sind Tragwerkelemente eines Gebäudes miteinander zu verbinden, wobei das Verbindungselement und die Tragwerke eine Tragwerkselementenverbindung ausbilden. Derartige Tragwerkselementenverbindungen sind bei der Planung eines Gebäudes derart zu dimensionieren, dass eine Standsicherheit des Gebäudes gewährleistet ist.

Nachteilig daran ist, dass bei Tragwerkelementen aus natürlichen Baumaterialien wie Holz die mechanischen Eigenschaften der Tragwerkelemente großen natürlichen Schwankungen unterliegen, weshalb bei der Planung des Tragwerks hohe Sicherheiten zu kalkulieren sind, und dadurch das Gebäude oftmals aufwendiger als nötig wird. Weiters ist es nach einem Bau des Gebäudes nur mit hohem Aufwand nachzuprüfen, ob die geplante Statik des Tragwerks auch in der Realität umgesetzt werden konnte. Ebenfalls kann nach oder während einem starken Naturereignis nur sehr aufwendig überprüft oder abgeschätzt werden, ob die Standsicherheit des Gebäudes noch gegeben ist.

Aufgabe der Erfindung ist es daher ein Verbindungselement der eingangs genannten Art anzugeben, mit welchem die genannten Nachteile vermieden werden können, mit welchem die Sicherheit eines Gebäudes verbessert werden kann.

Erfindungsgemäß wird dies durch die Merkmale des Patentanspruches 1 erreicht.

Dadurch ergibt sich der Vorteil, dass der tatsächliche Auslastungsgrad einer Tragwerkselementenverbindung gemessen werden kann, und nicht lediglich auf Berechnungen aus der Planungsphase zurückgegriffen werden muss. Dadurch können bei der Planung des Tragwerks die notwendigen Sicherheiten gering gehalten werden, da nachträglich überprüft werden kann, ob ein Auslastungsgrad der Tragwerkselementenverbindung den geplanten Auslastungsgrad übersteigt. Weiters kann dadurch einfach festgestellt werden, ob die Standsicherheit eines Gebäudes noch gegeben ist, beispielsweise nach einem Naturereignis, oder ob Einsturzgefahr besteht. Insbesondere hat sich auch gezeigt, dass ein Versagen einer Tragwerkskonstruktion häufig an der Stelle der Tragwerkselementenverbindung ereignet, beispielsweise durch ein lokales Verrotten eines Tragwerkelements an der Stelle des Verbindungselementes, und weniger in einem Tragwerkelement selber, wodurch eine Bestimmung des Auslastungsgrades an wichtigen Tragwerkselementenverbindungen bereits ausreichend ist um auf die Standsicherheit eines Gebäudes zu schließen. Dadurch kann insbesondere der Bau von Gebäuden mit umweltfreundlichen Tragwerkelemente aus nachwachsenden Rohstoffen wie Holz wesentlich wirtschaftlicher ausgebildet werden, da derartige Tragwerkelemente eine hohe natürliche Variation der physikalischen Eigenschaften aufweisen. Da das Verbindungselement die wenigstens eine Sensoreinheit umfasst ergibt sich weiters der Vorteil, dass die wenigstens eine Sensoreinheit mit standardisierten Verbindungselementen eingesetzt werden kann, deren Kennlinien bezüglich des Auslastungsgrades bekannt sind, wodurch von den Messdaten der Sensoreinheit besonders gut auf den Auslastungsgrad geschlossen werden kann. Weiters kann dadurch der Einbau der Sensoreinheiten in das Tragwerk wesentlich vereinfacht werden. Ein weiterer Vorteil der Positionierung der wenigstens einen Sensoreinheit in der Tragwerkselementenverbindung besteht darin, dass es möglich ist dadurch in Realität der tatsächliche Schnittkraftverlauf des Tragwerkelementes bestimmbar ist, für welche die Kräfte in den Tragwerkselementenverbindungen bestimmend sind.

Die Erfindung betrifft weiters ein Verfahren zur Erfassung eines Auslastungsgrades wenigstens einer Tragwerkselementenverbindung gemäß Patentanspruch 11.

Aufgabe der Erfindung ist es daher weiters ein Verfahren der eingangs genannten Art anzugeben, mit welchem die genannten Nachteile vermieden werden können, mit welchem die Sicherheit eines Gebäudes verbessert werden kann.

Erfindungsgemäß wird dies durch die Merkmale des Patentanspruches 11 erreicht.

Die Vorteile des Verfahrens entsprechen den Vorteilen des Verbindungselementes.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform eines Verbindungskörpers des Verbindungselementes in Aufsicht;
Fig. 2 die bevorzugte Ausführungsform des Verbindungskörpers des Verbindungselementes in Seitenansicht;
Fig. 3 eine bevorzugte Ausführungsform eines Gegenverbindungskörpers des Verbindungselementes in Aufsicht; und
Fig. 4 die bevorzugte Ausführungsform des Gegenverbindungskörpers des Verbindungselementes in Seitenansicht.

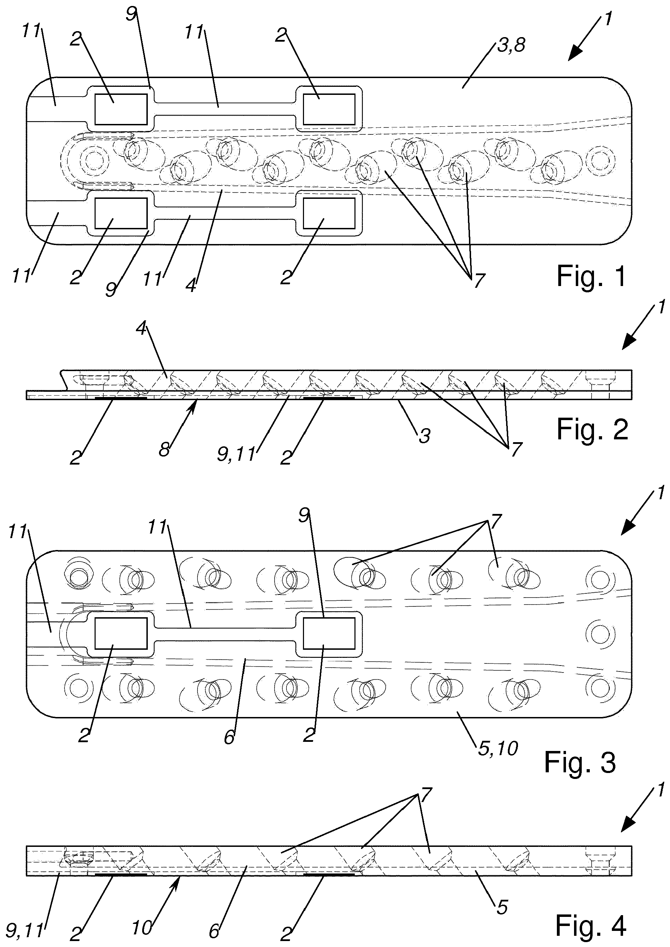

Die Fig. 1 bis 4 zeigen zumindest Teile einer bevorzugten Ausführungsform eines Verbindungselementes 1 zur Herstellung einer Tragwerkselementenverbindung zwischen wenigstens zwei Tragwerkelementen eines Gebäudes. Tragwerkselemente sind Teile eines Tragwerkes, welche auch als Tragglieder bezeichnet werden können. Die Gesamtheit der Tragwerkelemente sorgt für die Standsicherheit des Gebäudes. Die Standsicherheit, oft auch als Standfestigkeit bezeichnet, ist die Sicherheit eines Gebäudes gegen Kippen, Gleiten oder Drehen, und damit insbesondere gegen einen Einsturz des Gebäudes. Das Verbindungselement 1, welches auch als Verbindungseinrichtung bezeichnet werden kann, dient zum Verbinden der wenigstens zwei Tragwerkelemente, um derart eine Tragwerkselementenverbindung auszubilden.

Vorgesehen ist, dass das Verbindungselement 1 wenigstens eine Sensoreinheit 2 umfasst, und dass die wenigstens eine Sensoreinheit 2 zumindest mittelbar mit einem Auslastungsgrad der Tragwerkselementenverbindung zusammenhängende Messdaten erfasst. Die wenigstens eine Sensoreinheit 2 ist Teil des Verbindungselementes 1 und kann insbesondere in dem Verbindungselement integriert sein.

Weiters ist ein Verfahren zur Erfassung des Auslastungsgrades der wenigstens einen Tragwerkselementenverbindung zwischen den Tragwerkelementen des Gebäudes vorgesehen, wobei zur Ausbildung der Tragwerkselementenverbindung wenigstens zwei Tragwerkelemente des Gebäudes mit dem, die wenigstens eine Sensoreinheit 2 umfassenden, Verbindungselement 1 miteinander verbunden werden, wobei von der Sensoreinheit 2 zumindest mittelbar mit einem Auslastungsgrad der Tragwerkselementenverbindung zusammenhängende Messdaten erfasst werden.

Dadurch ergibt sich der Vorteil, dass der tatsächliche Auslastungsgrad einer Tragwerkselementenverbindung gemessen werden kann, und nicht lediglich auf Berechnungen aus der Planungsphase zurückgegriffen werden muss. Dadurch können bei der Planung des Tragwerks die notwendigen Sicherheiten gering gehalten werden, da nachträglich überprüft werden kann, ob ein Auslastungsgrad der Tragwerkselementenverbindung den geplanten Auslastungsgrad übersteigt. Weiters kann dadurch einfach festgestellt werden, ob die Standsicherheit eines Gebäudes noch gegeben ist, beispielsweise nach einem Naturereignis, oder ob Einsturzgefahr besteht. Insbesondere hat sich auch gezeigt, dass ein Versagen einer Tragwerkskonstruktion häufig an der Stelle der Tragwerkselementenverbindung ereignet, beispielsweise durch ein lokales Verrotten eines Tragwerkelements an der Stelle des Verbindungselementes 1, und weniger in einem Tragwerkelement selber, wodurch eine Bestimmung des Auslastungsgrades an wichtigen Tragwerkselementenverbindungen bereits ausreichend ist um auf die Standsicherheit eines Gebäudes zu schließen. Dadurch kann insbesondere der Bau von Gebäuden mit umweltfreundlichen Tragwerkelemente aus nachwachsenden Rohstoffen wie Holz wesentlich wirtschaftlicher ausgebildet werden, da derartige Tragwerkelemente eine hohe natürliche Variation der physikalischen Eigenschaften aufweisen. Da das Verbindungselement 1 die wenigstens eine Sensoreinheit 2 umfasst ergibt sich weiters der Vorteil, dass die wenigstens eine Sensoreinheit 2 mit standardisierten Verbindungselementen 1 eingesetzt werden kann, deren Kennlinien bezüglich des Auslastungsgrades bekannt sind, wodurch von den Messdaten der Sensoreinheit 2 besonders gut auf den Auslastungsgrad geschlossen werden kann. Weiters kann dadurch der Einbau der Sensoreinheiten 2 in das Tragwerk wesentlich vereinfacht werden. Ein weiterer Vorteil der Positionierung der wenigstens einen Sensoreinheit 2 in der Tragwerkselementenverbindung besteht darin, dass es möglich ist dadurch in Realität der tatsächliche Schnittkraftverlauf des Tragwerkelementes bestimmbar ist, für welche die Kräfte in den Tragwerkselementenverbindungen bestimmend sind.

Weiters kann eine Tragwerkselementenverbindung mit wenigstens zwei Tragwerkelementen und einem Verbindungselement 1 vorgesehen sein, wobei das Verbindungselement 1 die wenigstens zwei Tragwerkelemente miteinander verbindet.

Weiters kann ein Gebäude mit Tragwerkelementen vorgesehen sein, wobei wenigstens zwei Tragwerkelemente mit einem Verbindungselement 1 miteinander verbunden sind, insbesondere unter Ausbildung einer Tragwerkselementenverbindung. Das Tragwerk kann insbesondere Teil einer Dachkonstruktion sein. Weiters kann vorgesehen sein, dass im Wesentlichen das gesamte Gebäude ein Tragwerk aufweist, beispielsweise bei einem Holzbau.

Insbesondere kann vorgesehen, dass bei einem Gebäude zumindest neuralgische Tragwerkselementenverbindungen mit der wenigstens einen Sensoreinheit ausgestattet sind. Neuralgische Tragwerkselementenverbindungen sind jene Tragwerkselementenverbindungen, die im Vergleich zu den anderen Tragwerkselementenverbindungen besonders hohe Lasten tragen, und/oder deren Versagen zu einem Einsturz des Gebäudes führt.

Die Tragwerkelemente können insbesondere Stabwerkelemente sein. Derartige Stabwerkelemente können insbesondere Stäbe, Träger, Rahmen und dergleichen sein. Derartige stabförmige Tragwerkelemente haben insbesondere im Wesentlichen punktförmige Tragwerkselementenverbindungen untereinander, welche als Knoten der Lastübertragungen dienen. Dadurch kann der Auslastungsgrad der Tragwerkselementenverbindungen bereits durch wenige Sensoreinheiten 2 des Verbindungselementes 1 zumindest mittelbar bestimmt werden.

Die Tragwerkelemente können auch Flächentragwerke, wie Platten, Scheiben Schalen und dergleichen sein, welche ebenfalls über Verbindungselemente 1 miteinander verbunden werden können.

Besonders bevorzugt können die Tragwerkelemente aus Holz sein. Holz ist ein nachwachsender und daher umweltfreundlicher Rohstoff, wobei beim Holz die physikalischen Parameter aufgrund des inhomogenen Aufbaus stärker variieren können als bei anderen Baumaterialien wie Beton oder Stahl. Dadurch ist es bei Tragwerkelementen aus Holz besonders vorteilhaft, wenn der tatsächliche Auslastungsgrad bestimmbar ist, da dadurch bei der Planung mit geringeren Sicherheiten kalkuliert werden kann, da einfach nach dem Bau des Gebäudes überprüfbar ist, ob geplante Auslastungsgrade der Tragwerkselementenverbindungen überschritten wurden, wobei fehlerhafte Tragwerkselementenverbindungen gezielt ausgebessert werden können.

Die Verbindungselemente 1 können insbesondere aus Metall, bevorzugt Stahl, sein.

Das Verbindungselement 1 umfasst wenigstens eine Sensoreinheit 2, wobei die wenigstens eine Sensoreinheit 2 ausgebildet ist zumindest mittelbar mit einem Auslastungsgrad der Tragwerkselementenverbindung zusammenhängende physikalische Größen zu erfassen, und basierend auf dieser erfassten physikalische Größe Messdaten auszugeben. Der Auslastungsgrad ist das Verhältnis einer momentanen tatsächlichen mechanischen Belastung, insbesondere der momentanen Traglast, und einer theoretischen maximalen Belastung, insbesondere der maximalen Traglast, der Tragwerkselementenverbindung. Hierbei können mehrere Belastungen bei dem Auslastungsgrad berücksichtigt werden, insbesondere Zugbelastungen, Druckbelastungen, Scherbelastungen, statische Belastungen und/oder dynamische Belastungen. Von der Art der Tragwerkselementenverbindung können die maximalen Belastungen abhängen.

Das Verbindungselement 1 kann insbesondere mehrere Sensoreinheiten 2 umfassen.

Zumindest mittelbar mit einem Auslastungsgrad der Tragwerkselementenverbindung zusammenhängende Messdaten sind Daten, aus welchem zumindest indirekt auf den Auslastungsgrad geschlossen werden können.

Bevorzugt kann vorgesehen sein, dass die Messdaten den Auslastungsgrad unmittelbar bestimmen.

Gemäß einer bevorzugten Ausführungsform kann vorgesehen sein, dass von der Sensoreinheit bereits der Auslastungsgrad der Tragwerkselementenverbindung bestimmt wird, also die Messdaten direkt dem Auslastungsgrad entsprechen. Dadurch kann der Auslastungsgrad der Tragwerkselementenverbindung von der Sensoreinheit direkt und unmittelbar bestimmt werden.

Gemäß einer anderen bevorzugten Ausführungsform kann vorgesehen sein, dass die Messdaten Rohdaten entsprechen, aus welchen der Auslastungsgrad berechnet werden kann. Dadurch kann der Auslastungsgrad der Tragwerkselementenverbindung von der Sensoreinheit indirekt aber unmittelbar bestimmt werden.

Besonders bevorzugt kann vorgesehen sein, dass die Sensoreinheit 2 wenigstens einen Dehnungsmessstreifen aufweist. Durch den Dehnungsmessstreifen kann eine mechanische Verformung direkt gemessen werden, wobei durch die mechanische Verformung des betreffenden Teils des Verbindungselementes 1 im Wesentlichen direkt auf die einwirkenden und übertragenen Kräfte des Verbindungselementes 1 geschlossen werden kann. Insbesondere kann die Sensoreinheit 2 wenigstens zwei paarweise angeordnete Dehnungsmessstreifen umfassen, wobei insbesondere die paarweise angeordneten Dehnungsmessstreifen in einem rechten Winkel zueinander angeordnet sind. Besonders bevorzugt kann die Sensoreinheit 2 drei Dehnungsmessstreifen aufweisen, welche insbesondere als Rosetten-Dehnungsmessstreifen angeordnet sind.

Weiters kann vorgesehen sein, dass die Messdaten den Auslastungsgrad mittelbar bestimmen. Hierbei kann vorgesehen sein, dass anhand der Messdaten bestimmbar ist, ob die maximale Belastbarkeit der Tragwerkselementenverbindung herabgesetzt ist. Bei einer Herabsetzung der maximalen Belastbarkeit wird bei gleichbleibender tatsächlichen Belastung der Auslastungsgrad erhöht.

Insbesondere kann vorgesehen sein, dass die Sensoreinheit 2 einen Temperatursensor umfasst. Anhand eines Temperatursensors kann die Temperatur des Verbindungselementes 1 bestimmt werden. Hierbei hat sich gezeigt, dass im Falle eines Brandes bei Holzbauten die Standsicherheit in erster Linie durch ein Versagen der Verbindungselemente 1 gefährdet ist, da die Verbindungselemente 1 mit der Hitze erweichen, während die Tragwerkelemente aus Holz die Tragfähigkeit noch für lange Zeit behalten. Dadurch kann während eines Brandes die Standsicherheit des Gebäudes überwacht werden, um etwaige Einsatzkräfte rechtzeitig aus dem Gebäude zu evakuieren.

Weiters kann vorgesehen sein, dass die Sensoreinheit 2 einen Feuchtigkeitssensor umfasst. Anhand eines Feuchtigkeitssensors kann die Feuchtigkeit bei dem Verbindungselement 1 bestimmt werden. Hierbei hat sich gezeigt, dass bei erhöhter Feuchtigkeit im Bereich des Verbindungselementes 1 sich die Gefahr erhöht, dass die maximale Tragfähigkeit der Tragwerkselementenverbindung herabgesetzt wird, sei es durch ein Rosten des Verbindungselementes 1, einem Verrotten der Tragwerkelemente oder durch eine Herabsetzung der Auszugstragfähigkeit von Verbindungsschrauben. Dadurch kann verlässlich eine schadhafte Tragwerkselementenverbindung identifiziert und gegebenenfalls repariert oder trockengelegt werden.

Insbesondere kann vorgesehen sein, dass das Verbindungselement eine Vielzahl an Sensoreinheiten 2 umfasst, und dass die Sensoreinheiten 2 bevorzugt unterschiedliche physikalische Größen erfassen und als Messdaten ausgeben.

Das Verbindungselement 1 bezeichnet die Gesamtheit der Teile, welche mindestens zwei Tragwerkelemente miteinander verbinden.

Als Verbindungselemente 1 können insbesondere Schlitzbleche, Lochbleche, Winkelbleche, Balkenschuhe, Verbindungsbolzen, Stabdübel, Dübel besonderer Bauart, Gewindestangen, einzelne Schrauben, Schraubengruppen oder andere ingenieursmäßige Holzverbindungen sein, welche zwei Tragwerkelemente direkt miteinander verbinden.

Besonders bevorzugt kann vorgesehen sein, dass das Verbindungselement 1 einen Verbindungskörper 3 mit einer Auflagefläche 8, einer Befestigungseinrichtung und einer Kupplungseinrichtung 4 aufweist, dass der Verbindungskörper 3 über die Befestigungseinrichtung mit einem an der Auflagefläche 8 anliegenden ersten Tragwerkelement befestigbar ist, und dass der Verbindungskörper 3 durch die Kupplungseinrichtung 4 zumindest mittelbar mit einem zweiten Tragwerkelement befestigbar ist. Derartige Verbindungselement 1 sind auch als sogenannte Systemverbinder bekannt, und haben den Vorteil, dass der Verbindungskörper 3 zunächst an dem ersten Tragwerkelement befestigt werden kann, und anschließend über die Kupplungseinrichtung 4 einfach zumindest mittelbar mit einem zweiten Tragwerkelement befestigt werden kann. Dadurch kann das Verbindungselement 1 bereits am Boden an den Tragwerkelementen befestigt werden, während die tatsächliche Herstellung der Tragwerkselementenverbindung vor Ort sehr schnell erfolgen kann. Zum Befestigen des Verbindungskörpers 3 an dem ersten Tragwerkelement kann der Verbindungskörper 3 an der Auflagefläche 8 direkt mit dem ersten Tragwerkelement in Kontakt gebracht werden, und anschließend mittels der Befestigungseinrichtung unmittelbar mit dem ersten Tragwerkelement verbunden werden. Durch die Auflagefläche 8 kann eine gute Kraftüberleitung von dem ersten Tragwerkelement an den Verbindungskörper 3 erfolgen. Ein weiterer Vorteil ist, dass dadurch die Sensoreinheiten 2 beim dem herkömmlichen Einbau des Verbindungselementes 1 ebenfalls automatisch in die Tragwerkselementenverbindung eingebaut werden, wodurch der Einbau von den üblich geschulten Bauarbeitern vorgenommen werden kann, ohne dass eine spezielle Ausbildung bezüglich dem Einbau von Sensorsystemen erforderlich ist. Weiters erfordert dadurch der Einbau der Sensoreinheiten 2 keinen zusätzlichen Aufwand.

Vorteilhaft daran ist weiters, dass der Verbindungskörper 3 eine gut vordefinierte Umgebung für die wenigstens eine Sensoreinheit 2 bildet, und für eine Vielzahl an unterschiedlichen Arten von Tragwerkselementenverbindungen einsetzbar sind, wodurch der Auslastungsgrad von vielen unterschiedlichen Tragwerkselementenverbindungen leicht bestimmbar ist, ohne dass die Sensoreinheit 2 für jede einzelne Tragwerkselementenverbindung einzeln kalibriert werden bracht. Weiters erfolgt eine konzentrierte und vordefinierte Kraftübertragung an der Kupplungseinrichtung 4, welche gut bestimmbar ist. Ein Verbindungskörper 3 der bevorzugten Ausführungsform ist in den Fig. 1 und 2 dargestellt.

Die Auflagefläche 8 kann im Wesentlichen eben sein.

Insbesondere kann vorgesehen sein, dass die Befestigungseinrichtung Durchgangsöffnungen 7 in dem Verbindungskörper 3 und durch diese Durchgangsöffnungen 7 führende stiftförmige Verbindungsmittel aufweist. Die stiftförmigen Verbindungsmittel können insbesondere Verbindungsschrauben, besonders bevorzugt Holzschrauben, sein. Alternativ können die stiftförmigen Verbindungsmittel aber auch Bolzen oder Dübel sein. Der Verbindungskörper 3 weist dabei die Durchgangsöffnungen 7 zur Aufnahme der stiftförmigen Verbindungsmittel auf, wobei der Verbindungskörper 3 über die stiftförmigen Verbindungsmittel mit dem ersten Tragwerkselement verschraubt werden kann. Die stiftförmigen Verbindungsmittel können insbesondere sein. In den Fig. 1 bis 4 sind nicht alle Durchgangsöffnungen 7 mit Bezugszeichen versehen.

Weiters kann vorgesehen sein, dass die wenigstens eine Sensoreinheit 2, insbesondere unmittelbar, eine mechanische Belastung der stiftförmigen Verbindungsmittel erfasst. Hierbei kann die wenigstens eine Sensoreinheit 2 insbesondere eine Zugbelastung einer der stiftförmigen Verbindungsmittel und/oder auf die stiftförmigen Verbindungsmittel wirkende Drehmomente erfassen. Dadurch können die auf die Befestigungseinrichtung zwischen dem Verbindungskörper 3 und dem ersten Tragwerkselement wirkenden Kräfte von der Sensoreinheit 2 erfasst werden, wobei die maximale Belastbarkeit einer Tragwerkselementenverbindung häufig von der maximalen Belastbarkeit der Befestigungseinrichtung abhängt.

Insbesondere kann vorgesehen sein, dass die wenigstens eine Sensoreinheit 2 fest mit dem Verbindungskörper 3 verbunden ist. Hierbei kann die wenigstens eine Sensoreinheit 2 in dem Verbindungskörper 3 eingebaut, und/oder mit einer Außenseite des Verbindungskörpers 3 fest verbunden, insbesondere verklebt sein.

Besonders bevorzugt kann die Sensoreinheit 2 in einer Aussparung 9 an der Auflagefläche 8 angeordnet sein. Derart kann die Sensoreinheit 2 insbesondere eine Verformung des Verbindungskörpers 3 messen. Insbesondere kann vorgesehen sein, dass mehrere Sensoreinheiten 2 an dem Verbindungskörper 3 angeordnet sind. Weiters ist die Sensoreinheit 2 in einem an dem ersten Tragwerkelement befestigten Zustand des Verbindungskörpers 3 vor äußeren Einflüssen geschützt. Die Aussparung 9 kann insbesondere gefräst sein.

Weiters kann vorgesehen sein, dass die Aussparung 9 einen, von der Sensoreinheit 2 zu einem Rand führenden, Kanal 11 aufweist, damit, in den Fig. 1 bis 4 nicht dargestellte, elektrische Leitungen von der Sensoreinheit 2 oder den Sensoreinheiten in der Aussparung 9 nach außen geführt werden können.

Bevorzugt kann vorgesehen sein, dass die wenigstens eine Sensoreinheit 2 in einer, insbesondere in lediglich einer, der stiftförmigen Verbindungsmittel angeordnet ist. Insbesondere kann eine der stiftförmigen Verbindungsmittel hohl sein, wobei im inneren dieser Verbindungsschraube die Sensoreinheit 2 angeordnet ist. Die anderen Verbindungsschraube, können insbesondere herkömmliche, also massive, stiftförmige Verbindungsmittel sein, wodurch die maximale Belastbarkeit der Befestigungseinrichtung nur unwesentlich herabgesetzt wird. Durch die Verbindungsschraube mit der Sensoreinheit 2 kann dann auf die tatsächliche Belastung der anderen stiftförmigen Verbindungsmittel geschlossen werden.

Weiters kann bevorzugt vorgesehen sein, dass das Verbindungselement 1 einen Gegenverbindungskörper 5 mit einer weiteren Auflagefläche 10, einer weiteren Befestigungseinrichtung und einer Gegenkupplungseinrichtung 6 aufweist, dass der Gegenkupplungseinrichtung 6 über die weitere Befestigungseinrichtung mit einem an der weiteren Auflagefläche 10 anliegenden zweiten Tragwerkelement befestigbar ist, und dass zum Verbinden des Verbindungskörpers 3 mit dem Gegenverbindungskörper 5 die Gegenkupplungseinrichtung 6 mit der Kupplungseinrichtung 4 kuppelbar ist. Zum Befestigen des Gegenverbindungskörpers 5 an dem zweiten Tragwerkelement kann der Gegenverbindungskörper 5 an der weiteren Auflagefläche 10 direkt mit dem zweiten Tragwerkelement in Kontakt gebracht werden, und anschließend mittels der weiteren Befestigungseinrichtung unmittelbar mit dem zweiten Tragwerkelement verbunden werden. Dadurch kann eine Lastübertragung von dem ersten Tragwerkelement auf das zweite Tragwerkelement im Wesentlichen vollständig über die Verbindung der Kupplungseinrichtung 4 mit der Gegenkupplungseinrichtung 6 erfolgen, wobei die Lastübertragung durch die Kupplungseinrichtung 4 und Gegenkupplungseinrichtung 6 durch die Sensoreinrichtung 2 gut erfassbar ist. Ein Gegenverbindungskörper 5 der ersten bevorzugten Ausführungsform ist in den Fig. 3 und 4 dargestellt.

Insbesondere kann vorgesehen sein, dass die weitere Befestigungseinrichtung Durchgangsöffnungen 7 in dem Gegenverbindungskörper 5 und durch diese Durchgangsöffnungen 7 führende stiftförmige Verbindungsmittel aufweist.

Insbesondere kann vorgesehen sein, dass die wenigstens eine Sensoreinheit 2 fest mit dem Gegenverbindungskörper 5 verbunden ist. Hierbei kann die wenigstens eine Sensoreinheit 2 in dem Gegenverbindungskörper 5 eingebaut, und/oder mit einer Außenseite des Gegenverbindungskörpers 5 fest verbunden, insbesondere verklebt, sein. Insbesondere kann die Sensoreinheit 2 in einer Aussparung 9 an der weiteren Auflagefläche 10 angeordnet sein.

Weiters kann vorgesehen sein, dass sowohl der Verbindungskörper 3 als auch der Gegenverbindungskörper 5 wenigstens eine Sensoreinheit 2 aufweist.

Insbesondere kann vorgesehen sein, dass die Kupplungseinrichtung 4 an einer der Auflagefläche 8 gegenüberliegenden Seite des Verbindungskörpers 3 angeordnet ist.

Weiters kann vorgesehen sein, dass die Gegenkupplungseinrichtung 6 an einer der weiteren Auflagefläche 10 gegenüberliegenden Seite des Gegenverbindungskörpers 5 angeordnet ist.

Weiters kann vorgesehen sein, dass der Verbindungskörper 3 im Wesentlichen plattenförmig ist.

Ebenfalls kann vorgesehen sein, dass der Gegenverbindungskörper 5 im Wesentlichen plattenförmig ist.

Besonders bevorzugt kann vorgesehen sein, dass die Kupplungseinrichtung 4 und die Gegenkupplungseinrichtung 6 als lösbare Steckverbindung, insbesondere als eine Nut-Feder-artige lösbare Steckverbindung, ausgebildet sind. Durch eine derartige Kupplungseinrichtung 4 und Gegenkupplungseinrichtung 6 kann der Verbindungskörper 3 einfach und ohne Verwendung von Werkzeug mit dem Gegenverbindungskörper 5 verbunden werden, wodurch die Tragwerkelementverbindung ebenfalls einfach und ohne Werkzeug hergestellt werden kann.

Insbesondere kann die Kupplungseinrichtung 4 als eine Feder ausgebildet sein und die Gegenkupplungseinrichtung 6 als gegengleiche hinterschnittene Nut.

Als Feder ist dabei der in Fig. 2 dargestellte vorspringende Bereich bezeichnet. In Fig. 1 ist die Feder lediglich strichliniert dargestellt, da diese von dem restlichen Verbindungskörper 3 verdeckt wird. Die Feder weist eine deutliche Längserstreckung auf, und ist dazu vorgesehen in eine gegengleiche Aufnahme, welche als Nut bezeichnet ist, eingeführt zu werden. Die Feder kann an deren umfänglichen Steg eine Hinterscheidung aufweisen. Die Feder kann weiters einen abgerundeten Einführbereich aufweisen, um das Einführen der Feder in die Nut zu vereinfachen. Zudem kann die Feder einen sich erweiternden Bereich aufweisen, wodurch eine gute Lastübertragung in der Hauptbelastungsrichtung gegeben ist, sowie eine selbstzentrierende Wirkung, welche für einen wackelfreien Sitz der Steckverbindung sorgt.

Die Nut ist in den Fig. 3 und 4 strichliniert dargestellt, da diese vom Gegenverbindungskörper 5 verdeckt wird. Die Nut kann insbesondere als längliche, an einer Stirnseite offene Aufnahme ausgebildet sein, und ist entsprechend gegengleich der Feder ausgebildet. Die Nut kann weiters hinterschnitten sein.

Die beschriebe Nut-Feder-artige lösbare Steckverbindung ist dazu vorgesehen durch ineinanderschieben der Kupplungseinrichtung 4 zu der Gegenkupplungseinrichtung 6 gebildet zu werden. Diese ist geeignet, Kräfte in allen Richtungen aufzunehmen, außer derjenigen, welche zum Auftrennen der Nut-Feder-artigen lösbaren Steckverbindung führt. Durch das Vorsehen von Sperrschrauben oder Sperrklappen kann die Nut-Feder-artige lösbare Steckverbindung zusätzlich auch Kräfte in die Richtung, welche zum Auftrennen der Nut-Feder-artigen lösbaren Steckverbindung führt, aufnehmen. Die Nut-Feder-artige lösbare Steckverbindung weist dabei eine sog. Hauptbelastungsrichtung auf, welche mit der Längserstreckung der Nut bzw. Feder 10 übereinstimmt.

Besonders bevorzugt kann eine Anordnung mit wenigstens einem Verbindungselement 1 und einer Auswertevorrichtung vorgesehen sein, wobei die Auswertevorrichtung eine Empfangseinheit zum Empfangen von Messdaten der Sensoreinheit 2 des wenigstens einen Verbindungselementes 1 aufweist. Weiters kann vorgesehen sein, dass die von der wenigstens einen Sensoreinheit 2 erfassten Messdaten an eine Auswertevorrichtung übermittelt werden, und die Auswertevorrichtung den Auslastungsgrad der wenigstens einen Tragwerkselementenverbindung bestimmt. Die Anordnung kann insbesondere eine Vielzahl an Verbindungselemente 1 umfassen, wobei die Verbindungselemente 1 insbesondere an unterschiedlichen Tragwerkselementenverbindungen eingesetzt sind. Dadurch können die Messdaten der Sensoreinheiten 2 von einer Auswertevorrichtung erfasst werden, wodurch die Sensoreinheiten 2 an sich einfach aufgebaut sein können, während die Auswertung zentral durch die Auswertevorrichtung erfolgt. Dadurch können eine Vielzahl an Sensoreinheiten 2 kostengünstig eingesetzt werden.

Hierbei können die Auslastungsgrade bereits von den Sensoreinheiten 2 berechnet und als Messdaten ausgegeben werden, wobei die Auswertevorrichtung diese Messdaten aufnimmt. Dadurch können die Messdaten zentral durch die Auswertevorrichtung gesammelt und zur Verfügung gestellt werden.

Alternativ können die Messdaten Rohdaten der Messungen der Sensoreinheiten 2 sein, wobei eine Berechnung der einzelnen Auslastungsgrade in der Auswertevorrichtung erfolgt.

Bevorzugt kann vorgesehen sein, dass die wenigstens eine Sensoreinheit 2 über elektrische Leitungen mit der Auswertevorrichtung verbunden ist. Die Empfangseinheit der Auswertevorrichtung kann hierbei eine Schnittstelle zum Empfang der über die Leitung übertragenen Messdaten sein. Dadurch können die Sensoreinheit 2 einfach ausgebildet sein, da die Auswertung der Messdaten und die Energieversorgung über die Auswertevorrichtung bereitgestellt werden kann. Weiters kann dadurch einfach eine dauerhafte Überwachung der Auslastungsgrade sichergestellt werden.

Weiters kann vorgesehen sein, dass die wenigstens eine Sensoreinheit 2 eine Sendeeinrichtung zum Übermitteln der Messdaten über Funk aufweist. Die Empfangseinheit der Auswertevorrichtung kann hierbei eine Funkempfangseinheit sein. Vorteilhaft daran ist, dass auf Leitungen zwischen den Sensoreinheiten 2 und der Auswertevorrichtung verzichtet werden können, wobei die Auswertevorrichtung mobil ausgebildet sein kann.

insbesondere kann vorgesehen sein, dass die wenigstens eine Sensoreinheit 2 über einen Energiespeicher, insbesondere eine Batterie oder Akkumulator, verfügt. Dadurch kann die wenigstens eine Sensoreinheit 2 autonom die Messdaten erfassen und funken.

Bevorzugt kann vorgesehen sein, dass die wenigstens eine Sensoreinheit 2 und die Auswertevorrichtung über eine induktive Ladeeinheit verbunden sind, und dass die Auswertevorrichtung die Sensoreinheit 2 beim Auslesen drahtlos mit Energie versorgt. Dadurch können viele einfach ausgebildete Sensoreinheiten 2 im Gebäude verbaut werden. Zum Auslesen der Messdaten wird die Auswertevorrichtung in die Nähe der Sensoreinheit 2 gebracht, aktiviert dabei die Sensoreinheit 2, und kann dann die Messdaten auslesen.

Insbesondere kann vorgesehen sein, dass die Auswertevorrichtung eine, insbesondere als Anzeigeeinheit ausgebildete, Ausgabeeinheit aufweist. Dadurch können die Auslastungsgrade der Tragwerkselementverbindungen an der Auswertevorrichtung abgelesen werden.

Bevorzugt kann vorgesehen sein, dass durch die Auswertevorrichtung die Auslastungsgrade der Tragwerkselementverbindungen bestimmt und angezeigt werden.

Hierbei ergeben sich viele Situationen, an welchen das Bestimmen der Auslastungsgrade der Tragwerkselementverbindungen vorteilhaft oder notwendig sein kann.

Gemäß eines ersten Verwendungszweckes kann vorgesehen sein, dass der Auslastungsgrad der Tragwerkselementverbindungen bei Bedarf überprüft wird. Hierbei kann während des Baus des Gebäudes der Auslastungsgrad der Tragwerkselementverbindungen überprüft werden, um fehlerhafte Tragwerkselementverbindungen aufzufinden. Beispielsweise sollten bei einem symmetrischen Tragwerk die Last auf mehrere Tragwerkselementverbindungen gleichmäßig verteilt sein, wodurch sich auch gleichmäßige Auslastungrade einstellen sollten. Bei einer Abweichung kann schnell darauf geschlossen werden, dass eine der Tragwerkselementverbindungen mangelhaft ausgeführt wurde, wobei die mangelhaft ausgeführte Tragwerkselementverbindung schnell identifiziert und ausgebessert werden kann. Weiters kann bei Fertigstellung des Gebäudes vor einer Endabnahme überprüft werden, ob die tatsächliche Belastung der einzelnen Tragwerkselementverbindungen der geplanten Belastung entsprechen. Weiters kann vorgesehen sein, dass vor einem Umbau des Gebäudes, beispielsweise einer Aufstockung des Gebäudes, oder vor einer Unterbringung von schwerem Mobiliar oder Geräte überprüft werden, ob die Tragwerkselementverbindungen diese geplante Änderung der Statik zulassen. Auch kann vorgesehen sein, dass nach einem ungeplanten Naturereignis oder Katastrophe überprüft werden kann, ob sich die Statik des Tragwerks geändert hat und Einsturzgefahr besteht.

Weiters kann vorgesehen sein, dass bei mehreren Gebäuden die Auslastungsgrade der Tragwerkselementverbindungen ermittelt und mit den geplanten Auslastungsgraden verglichen werden. Derart kann die Planung zukünftiger Gebäude verbessert werden, da Tragwerkselementverbindungen mit wenig ausgeschöpften Auslastungsgraden bei zukünftigen Gebäuden kleiner dimensioniert werden können.

Insbesondere können über die Auslastungsgrade der Tragwerkselementverbindungen die Schneelast auf Dachkonstruktionen schnell ermittelt werden. Dadurch können einfach Messreihen bezüglich der Schneelast in bestimmten Gebieten erstellt werden, sei es um die Sicherheit zukünftiger Gebäude zu verbessern oder die Auswirkungen des Klimawandels in bestimmten Gebieten zu erfassen.

Bei einer lediglich bedarfsweisen Überprüfung des Auslastungsgrades kann es ausreichend sein, eine mobile Auswertevorrichtung zu verwenden, welche drahtlos mit den Sensoreinheiten kommuniziert. Hierbei kann ein Bausachverständiger eine mobile Auswertevorrichtung benutzen um die Auslastungsgrade der Tragwerkselementenverbindungen von unterschiedlichen Gebäuden auszulesen.

Bevorzugt kann weiters vorgesehen sein, dass die Auswertevorrichtung eine Funksendeeinheit aufweist. Durch die Funksendeeinheit können die gemessenen Auslastungsgrade auch außerhalb des Gebäudes empfangen und ausgewertet werden. Dadurch kann insbesondere bei einem Brand oder einem anderen Notfall von außen bestimmt werden, ob die Standsicherheit des Gebäudes noch gegeben ist.

Weiters kann vorgesehen sein, dass die Auswertevorrichtung ausgebildet ist eine Standsicherheit des Gebäudes anhand des Auslastungsgrades wenigstens einer Tragwerkselementenverbindung zu ermitteln. Dabei kann vorgesehen sein, dass die Auswertevorrichtung anhand des Auslastungsgrades der wenigstens einen Tragwerkselementenverbindung die Standsicherheit des Gebäudes ermittelt. Insbesondere kann vorgesehen sein, dass die Auswertevorrichtung eine Recheneinheit aufweist, und dass die Recheneinheit anhand der gemessenen Auslastungsgrade der einzelnen Tragwerkselemente die Standsicherheit des Gebäudes berechnet. Insbesondere kann die Recheneinheit mit einem Plan des Gebäudes vorprogrammiert sein. Dadurch kann die Anordnung dazu verwendet werden dauerhaft die Standsicherheit eines Gebäudes zu überwachen, wobei ein Benutzer der Auswertevorrichtung keine besonderen Vorkenntnisse über die Statik des betreffenden Gebäudes aufzuweisen braucht. Beispielsweise können dadurch Schäden im Tragwerk frühzeitig erkannt und behoben werden. Weiters können bei einer durch äußere Einflüsse geänderte Statik, beispielsweise durch eine hohe Schneelast am Dach, einfach überprüft werden, ob Probleme bezüglich der Standsicherheit bestehen.

Insbesondere kann vorgesehen sein, dass in der Auswertevorrichtung mehrere Standsicherheitszustände vordefiniert werden, und dass die Auswertevorrichtung basierend auf den Auslastungsgrade der Tragwerkselementenverbindung einen Standsicherheitszustand zuordnet. Die Standsicherheitszustände können beispielsweise drei oder mehr Zustände umfassen, wobei ein Zustand dadurch definiert sein kann, dass alle Auslastungsgrade in einem vorgesehenen Bereich sind, ein weiterer Zustand dadurch definiert sein kann, dass nicht alle Auslastungsgrade in einem vorgesehenen Bereich sind aber die Standsicherheit weiter gegeben ist, und ein letzter Zustand dadurch definiert sein kann, dass die Standsicherheit nicht mehr gegeben ist.

Weiters kann vorgesehen sein, dass die Auswertevorrichtung den ermittelten Standsicherheitszustand an eine Zentrale übermittelt. Die Zentrale kann außerhalb des Gebäudes sein und insbesondere die Standsicherheitszustände mehrerer Gebäude überwachen.

Bevorzugt kann vorgesehen sein, dass die Auswertevorrichtung weiters eine Warnvorrichtung aufweist, und dass die Warnvorrichtung ein Warnsignal ausgibt, wenn die von der Auswertevorrichtung ermittelte Standsicherheit einen Grenzwert unterschreitet. Insbesondere kann vorgesehen sein, dass die Auswertevorrichtung eine Warnung ausgibt, wenn die ermittelte Standsicherheit des Gebäudes einen Grenzwert unterschreitet. Der Grenzwert der Standsicherheit kann insbesondere ein Wert oder eine Standsicherheitszustand sein, ab welchen die Standsicherheit des Gebäudes nicht mehr gegeben ist. Dadurch können die Personen in einem Gebäude sofort evakuiert werden, sobald die Standsicherheit nicht mehr gegeben ist und Einsturzgefahr besteht.

Die Warnvorrichtung kann insbesondere eine akustische und/oder eine visuelle Signalanlage sein. Insbesondere kann vorgesehen sein, dass die Auswertevorrichtung mit der Warnvorrichtung einer Brandmeldevorrichtung gekoppelt ist. Dadurch kann die Auswertevorrichtung im Falle einer Einsturzgefahr durch die selbe Warnvorrichtung das Gebäude evakuieren, welche ohnehin für den oftmals gesetzlich vorgeschriebenen Brandschutz vorgesehen sind.

## Patentansprüche

1. Verbindungselement (1) zur Herstellung einer Tragwerkselementenverbindung zwischen wenigstens zwei Tragwerkelementen eines Gebäudes, **dadurch gekennzeichnet, dass** das Verbindungselement (1) wenigstens eine Sensoreinheit (2) umfasst, und dass die wenigstens eine Sensoreinheit (2) zumindest mittelbar mit einem Auslastungsgrad der Tragwerkselementenverbindung zusammenhängende Messdaten erfasst.

2. Verbindungselement (1) nach Anspruch 1, **dadurch gekennzeichnet, dass** die Sensoreinheit (2) wenigstens einen Dehnungsmessstreifen aufweist.

3. Verbindungselement (1) nach Anspruch 1 oder 2, **dadurch gekennzeichnet, dass** das Verbindungselement (1) einen Verbindungskörper (3) mit einer Auflagefläche (8), einer Befestigungseinrichtung und einer Kupplungseinrichtung (4) aufweist, dass der Verbindungskörper (3) über die Befestigungseinrichtung mit einem an der Auflagefläche (8) anliegenden ersten Tragwerkelement befestigbar ist, und dass der Verbindungskörper (3) durch die Kupplungseinrichtung (4) zumindest mittelbar mit einem zweiten Tragwerkelement befestigbar ist.

4. Verbindungselement (1) nach Anspruch 3, **dadurch gekennzeichnet, dass** die Befestigungseinrichtung Durchgangsöffnungen (7) in dem Verbindungskörper (3) und durch diese Durchgangsöffnungen (7) führende stiftförmige Verbindungsmittel aufweist

5. Verbindungselement (1) nach Anspruch 4, **dadurch gekennzeichnet, dass** die wenigstens eine Sensoreinheit (2) eine mechanische Belastung der stiftförmigen Verbindungsmittel erfasst.

6. Verbindungselement (1) nach einem der Ansprüche 3 bis 5, **dadurch gekennzeichnet, dass** das Verbindungselement (1) einen Gegenverbindungskörper (5) mit einer weiteren Auflagefläche (10), einer weiteren Befestigungseinrichtung und einer Gegenkupplungseinrichtung (6) aufweist, dass der Gegenkupplungseinrichtung (6) über die weitere Befestigungseinrichtung mit einem an der weiteren Auflagefläche (10) anliegenden zweiten Tragwerkelement befestigbar ist, und dass zum Verbinden des Verbindungskörpers (3) mit dem Gegenverbindungskörper (5) die Gegenkupplungseinrichtung (6) mit der Kupplungseinrichtung (4) kuppelbar ist.

7. Anordnung umfassend wenigstens ein Verbindungselement (1) nach einem der Ansprüche 1 bis 6 und eine Auswertevorrichtung, wobei die Auswertevorrichtung eine Empfangseinheit zum Empfangen von Messdaten der Sensoreinheit (2) des wenigstens einen Verbindungselementes (1) aufweist.

8. Anordnung nach Anspruch 7, **dadurch gekennzeichnet, dass** die Auswertevorrichtung ausgebildet ist eine Standsicherheit des Gebäudes anhand des Auslastungsgrades wenigstens einer Tragwerkselementenverbindung zu ermitteln.

9. Anordnung nach Anspruch 8, **dadurch gekennzeichnet, dass** die Auswertevorrichtung weiters eine Warnvorrichtung aufweist, und dass die Warnvorrichtung ein Warnsignal ausgibt, wenn die von der Auswertevorrichtung ermittelte Standsicherheit einen Grenzwert unterschreitet.

10. Gebäude mit Tragwerkelementen, wobei wenigstens zwei Tragwerkelemente mit einem Verbindungselement (1) gemäß einem der Ansprüche 1 bis 6 miteinander verbunden sind.

11. Verfahren zur Erfassung eines Auslastungsgrades wenigstens einer Tragwerkselementenverbindung zwischen Tragwerkelementen eines Gebäudes, wobei zur Ausbildung der Tragwerkselementenverbindung wenigstens zwei Tragwerkelemente des Gebäudes mit einem, wenigstens eine Sensoreinheit (2) umfassenden, Verbindungselement (1) miteinander verbunden werden, wobei von der Sensoreinheit (2) zumindest mittelbar mit einem Auslastungsgrad der Tragwerkselementenverbindung zusammenhängende Messdaten erfasst werden.

12. Verfahren nach Anspruch 11, **dadurch gekennzeichnet, dass** die von der wenigstens Sensoreinheit (2) erfassten Messdaten an eine Auswertevorrichtung übermittelt wird, und die Auswertevorrichtung den Auslastungsgrad der wenigstens einen Tragwerkselementenverbindung bestimmt.

13. Verfahren nach Anspruch 12, **dadurch gekennzeichnet, dass** die Auswertevorrichtung anhand des Auslastungsgrades der wenigstens einen Tragwerkselementenverbindung eine Standsicherheit des Gebäudes ermittelt.

14. Verfahren nach Anspruch 13, **dadurch gekennzeichnet, dass** die Auswertevorrichtung eine Warnung ausgibt, wenn die ermittelte Standsicherheit des Gebäudes einen Grenzwert unterschreitet.

15. Verfahren nach einem der Ansprüche 11 bis 14, **dadurch gekennzeichnet, dass** das Verbindungselement (1) einen Verbindungskörper (3) mit einer Auflagefläche (8), einer Befestigungseinrichtung und einer Kupplungseinrichtung (4) aufweist, dass der Verbindungskörper (3) über die Befestigungseinrichtung mit einem an der Auflagefläche (8) anliegenden ersten Tragwerkelement befestigt wird, dass der Verbindungskörper (3) durch die Kupplungseinrichtung (4) zumindest mittelbar mit einem zweiten Tragwerkelement befestigt wird.
